# EUROPÄISCHE PATENTSCHRIFT

(11) **EP 2 674 224 B1**
(45) Veröffentlichungstag und Bekanntmachung des Hinweises auf die Patenterteilung: **03.07.2019**
(21) Anmeldenummer: 13168575.2
(22) Anmeldetag: 21.05.2013
(51) Int. Cl.: B05B 11/04

(54) **Prüfgerät für einen Flüssigkeitsspender**
Testing device for a liquid dispenser
Appareil de contrôle pour un distributeur de liquide

(30) Priorität: 15.06.2012 DE 102012210143
(43) Veröffentlichungstag der Anmeldung: 18.12.2013
(73) Patentinhaber: Aptar Radolfzell GmbH, 78315 Radolfzell (DE)
(72) Erfinder: Wochele, Matthias, 78239 Rielasingen-Worblingen (DE); Birkhoff, Matthias, 47623 Kevelaer (DE)
(74) Vertreter: Patentanwaltskanzlei Cartagena

(56) Entgegenhaltungen:
- EP-A1- 1 213 003
- WO-A1-99/44750
- DE-A1-102004 062 814
- DE-B1- 2 553 902
- US-A1- 2005 109 099
- US-A1- 2007 248 498
- US-B1- 7 718 435

## Beschreibung

Die Erfindung betrifft ein Prüfgerät für einen Flüssigkeitsspender nach dem Oberbegriff des Anspruchs 1.

Ein solches Prüfgerät verfügt über eine Basis zum ortsfesten Aufstellen dieses Prüfgeräts. Es verfügt weiterhin über eine Aufnahmeeinrichtung, die zur Aufnahme eines Flüssigkeitsspenders vorgesehen ist, sowie über eine Betätigungseinrichtung, die zur mechanischen Betätigung des in der Aufnahmeeinrichtung aufgenommen Flüssigkeitsspenders ausgebildet ist.

Das Anwendungsgebiet solcher Prüfgeräte sind Flüssigkeitsspender, die dem Austrag primär pharmazeutischer, jedoch auch gegebenenfalls kosmetischer, Flüssigkeiten dienen können. Solche Prüfgeräte gestatten es, die entsprechenden Flüssigkeitsspender nach Aufnahme in der Aufnahmeeinrichtung in definierter Weise zu betätigen, um deren Austragverhalten zu untersuchen.

Die genannten Prüfgeräte sind durch Patentdokumente der Firma Proveris Scientific Corporation bereits bekannt geworden. So offenbart die US 7 658 122 B2 ein solches Gerät, welches zum Betätigen eines sogenannten Sprühspenders ausgebildet ist. Bei einem solchem Spender wird die Flüssigkeit im Zuge des Austrags in einem Sprühstrahl vernebelt. Die bekannten Prüfgeräte dienen insbesondere dem Zweck, den Sprühstrahl hinsichtlich seiner Formgebung und der Größe der entstandenen Tröpfchen zu untersuchen.

Bekannte Prüfgeräte haben sich in der Praxis als wertvoll herausgestellt. Sie gestatten es mit einem vergleichsweise geringen Aufwand, Prototypen von Flüssigkeitsspendern oder auch einer jeden Fertigungscharge der Serienfertigung entnommene Spender dahingehend zu untersuchen, ob diese gemäß der gewünschten Spezifiktionen arbeiten.

Neben solchen Spendern, die zum Austrag der Flüssigkeit als Sprühstrahl oder Nebel ausgebildet sind, sind aus dem Stand der Technik auch Tropfenspender bekannt. Dabei wird unter einem Tropfenspender im Sinne dieses Dokuments ein Spender verstanden, der an seiner Außenseite eine Tropfenbildungsfläche aufweist, wobei durch Betätigung des Tropfenspenders Flüssigkeit aus dem Flüssigkeitsspeicher des Tropfenspenders zu dieser Tropfenbildungsfläche geleitet werden kann, die sich dort ansammelt, bis der Tropfen sich aufgrund seiner Gewichtskraft vom Spender löst. Ein Beispiel für einen solchen Tropfenspender ist aus der DE 10 2010 047 840 bekannt. Derartige Tropfenspender sind häufig derart ausgebildet, dass sie über eine sogenannte "Squeeze Bottle" verfügen, also eine von außen manuell zusammendrückbare Kunststoffflasche, bei der der Austrag durch das Zusammendrücken der Flasche verursacht wird.

Aus Dokument DE 25 53 902 B1 ist ein Prüfgerät für so genannte Zentraltropfer bekannt, bei denen die Verbringung in einer Lage mit nach unten weisender Austragöffnung den Tropfvorgang ohne darüber hinausgehende Betätigung beginnen lässt. Die Besonderheit des hier beschriebenen Prüfergeräts liegt in einer schwenkbaren Einspannvorrichtung an einem Dreharm,

Aus Dokument US 2005/0109099 A1 ist eine Einrichtung zum Testen von Pumpen bekannt, wobei sich die Schrift schwerpunktartig mit Haushalts-Sprühspendern beschäftigt.

### Aufgabe und Lösung

Aufgabe der Erfindung ist es daher, ein Mittel zur Untersuchung solcher Tropfenspender zur Verfügung zu stellen.

Die der Erfindung zugrunde liegende Aufgabe wird durch ein Prüfgerät mit den Merkmalen des Anspruchs 1 erzielt.

Ein erfindungsgemäßes Prüfgerät ist als Prüfgerät für Tropfenspender ausgebildet. Zu diesem Zweck sind die Aufnahmeeinrichtungen und die Betätigungsvorrichtung derart ausgebildet und angeordnet, dass der Tropfenspender in einer Lage aufgenommen und betätigt werden kann, in der eine Austragöffnung des Tropfenspenders nach unten weist.

Der Grundgedanke der hier beschriebenen Erfindung liegt somit darin, ein Prüfgerät zu schaffen, welches durch eine hierfür vorgesehene Aufnahmeeinrichtung in reproduzierbarer Weise einen Tropfenspender aufnehmen und betätigen kann. Dabei ist die Aufnahmeeinrichtung derart ausgebildet, dass die Austragvorrichtung mit nach unten weisender Austragöffnung in der Aufnahmeeinrichtung gehalten werden kann. Unter der Richtung der Austragsöffnung wird im Kontext dieser Beschreibung jene Richtung verstanden in die aus dem Flüssigkeitsspeicher zur Austragöffnung herausgeforderte Flüssigkeit die Austragöffnung verlässt, wenn der Einfluss der Gravitation nicht beachtet wird.

Ebenso wie die Aufnahmeeinrichtung ist auch die Betätigungsvorrichtung eines erfindungsgemäßen Prüfgeräts derart ausgestaltet, dass der Spender in der genannten Überkopflage, also der Lage mit Austragöffnung nach unten weisend, betätigt werden kann.

Die Richtungsangabe in Hinblick auf die Auftragöffnung ist im Zusammenhang mit der Anordnung der Basis zu verstehen. Die Basis kann über eine weitgehend plane Unterseite des Prüfgeräts oder durch an der Unterseite vorgesehene Stellfüße oder dergleichen verfügen. Ihre Anordnung bestimmt, was im Sinne dieser Erfindung als unten bzw. oben verstanden wird.

Die Aufnahmeeinrichtung zur Aufnahme des Tropfenspenders ist vorzugsweise so angeordnet, dass bei eingesetztem Tropfenspender unter ihr eine Fallstrecke für einen ausgetragenen Tropfen verbleibt. Vorzugsweise ist diese Fallstrecke mindestens 30mm, insbesondere vorzugsweise mindestens 60mm lang. Die Fallstrecke kann in nachfolgender erläuterter Weise nach unten durch eine Aufprallplatte begrenzt sein.

Die Aufnahmeeinrichtung verfügt vorzugsweise über eine Aussparung an ihrem unteren Ende, beispielsweise an einer Auflageplatte der Aufnahmeeinrichtung, durch die hindurch die Fallstrecke des Tropfens verläuft oder durch die hindurch ein unterer Teil des Tropfenspender mitsamt Auslassöffnung von oben hindurchgeschoben wird. Bei einem Tropfenspender mit einer bestimmungsgemäß zum Austrag verformbaren Quetschflasche wird vorzugsweise nur eine sich an diese Quetschflasche anschließende starre Dosierbaugruppe durch die Aussparung hindurchgesteckt.

Die Aufnahmeeinrichtung ist am Prüfgerät in der schon beschriebenen Art und Weise derart angeordnet und derart ausgebildet, dass die Austragöffnung des aufgenommenen Tropfenspenders nach unten weist. Dabei wird unter einer Ausrichtung nach unten eine Ausrichtung verstanden, die mit einer bezogen auf die Basis vertikalen Ausrichtung einen Winkel kleiner als 30° einschließt. Vorzugsweise gestattet die Aufnahmeeinrichtung eine Aufnahme des Tropfenspenders, bei der dieser Winkel weniger als 15°, vorzugsweise 0° beträgt.

Bei einer besonders bevorzugten Ausgestaltung ist die Aufnahmeeinrichtung als Ganzes beweglich, insbesondere schwenkbeweglich. Unter der Beweglichkeit bzw. Schwenkbeweglichkeit als Ganzes wird dabei verstanden, dass die Aufnahmeeinrichtung mit in ihr aufgenommenem Tropfenspender gemeinsam gegenüber der Basis bewegbar ist. Vorzugsweise wird dabei auch die Betätigungseinrichtung mitbewegt, so dass die Relativposition der Betätigungseinrichtung zum Tropfenspender durch die Bewegbarkeit der Aufnahmeeinrichtung unverändert bleibt.

Die Schwenkbeweglichkeit der Aufnahmeeinrichtung gestattet es vorzugsweise, die Schwenkposition der Aufnahmeeinrichtung um mindestens 10° zu variieren, ohne das zu diesem Zweck der Tropfenspender von der Aufnahmeeinrichtung getrennt werden müsste. Diese Schwenkbeweglichkeit der Aufnahmeeinrichtung gestattet es daher, die Tropfenabgabe nicht nur in einer Ausgangsstellung, bei der die Richtung der Austragöffnung vorzugsweise vertikal ausgerichtet ist, sondern auch in demgegenüber leicht verschwenkten Stellungen, um hierdurch auch die Variation der Handhabung durch verschiedene Benutzer simulieren zu können. Die Beweglichkeit der Aufnahmeeinrichtung kann auch genutzt werden, um nach einem Austragvorgang einen Resttropfen vom Tropfenspender zu entfernen, wie im Weiteren noch erläutert wird.

Die Beweglichkeit, insbesondere die Schwenkbeweglichkeit, der Aufnahmeeinrichtung kann für eine unmittelbare manuelle Beeinflussung vorgesehen sein. Es ist jedoch auch möglich, einen Motor vorzusehen, der die Aufnahmeeinrichtung durch eine Steuereinrichtung gesteuert gegenüber der Basis bewegt, insbesondere verschwenkt.

Die Betätigungseinrichtung, die bei einem erfindungsgemäßen Prüfgerät vorgesehen ist, dient der insbesondere elektromotorischen Betätigung des Tropfenspenders. Sie umfasst demzufolge mindestens einen Motor, der durch eine Steuereinrichtung angesteuert zwei Aktoren verfahren kann, welcher den Tropfenspender oder eine Betätigungsfläche dessen mit einer Betätigungskraft beaufschlagt.

Erfindungsgemäß ist vorgesehen, dass mindestens zwei Aktoren vorgesehen sind, die dafür ausgebildet sind, den Tropfenspender in zueinander entgegengesetzten Richtungen kraftzubeaufschlagen. Es sind somit zwei gegenüber anderen Teilen der Aufnahmeeinrichtung bewegliche Aktoren vorgesehen, die elektromotorisch aufeinander zu bewegt werden können, wobei die Bewegungsrichtungen der Aktoren ein Winkel zwischen 150° und 210° einschließt. Eine derartige Aktorenkonfiguration gestattet es, die mit einer sogenannten "Squeeze Bottle" ausgebildeten Spender zu betätigen. Hierbei sind sowohl Gestaltungen denkbar, bei denen jedem Aktor ein eigener Elektromotor zugeordnet ist, als auch solche, bei denen ein Getriebe die Antriebskraft eines Elektromotors auf beide Aktoren verteilt.

Erfindungsgemäß ist vorgesehen, dass die Aktoren der Betätigungseinrichtung dafür ausgebildet sind, den Tropfenspender mittels der Aktoren orthogonal oder im Wesentlichen orthogonal (+/- 20°) zur Austragrichtung der Austragöffnung des Tropfenspenders kraftzubeaufschlagen. In einem solchem Fall ist die Betätigungseinrichtung somit derart an der oder im Bereich der Aufnahmeeinrichtung angeordnet, dass bei Aufnahme eines Tropfenspenders, dessen Austragöffnung nach unten weist, eine Betätigung durch die Aktoren horizontal oder nahezu horizontal erfolgt. Hierdurch wird es möglich, auch Tropfenspender mittels des erfindungsgemäßen Prüfgeräts zu untersuchen, die als sogenannte "Side Actuation"-Spender ausgebildet sind, also in etwa einen rechten Winkel zwischen der Betätigungsrichtung und der Austragrichtung einschließen.

Die Aktoren sind jene Teile der Betätigungseinrichtung, die in unmittelbaren Kontakt mit dem Tropfenspender gelangen. Während es bei Tropfenspendern mit einem in sich nicht verformbaren, jedoch gegenüber einen Grundkörper des Tropfenspenders beweglichen Betätigungsknopf meist nicht darauf ankommt, wie die Aktoren geformt sind, der diesen Betätigungsknopf kraftbeaufschlagt, ist die Kraftbeaufschlagung im Falle einer sich verformenden Betätigungsfläche am Tropfenspender sehr viel abhängiger von der Formgebung der Aktoren selbst. Es wird daher vorgeschlagen, die Aktoren mit einem Kontaktbereich an seinem zum Tropfenspender hin weisenden Ende auszugestalten, der konvex geformt ist, insbesondere eine konvex gewölbte Form aufweist, und/oder der aus einem plastischen verformbaren Material gebildet ist, insbesondere mit einem E-Modul von weniger als 200 N/mm². Beide Maßnahmen dienen alleine oder in Kombination der realistischen Simulation der Betätigung mittels menschlicher Finger.

Unter einer konvexen Formgebung wird eine Formgebung verstanden, bei der Teilbereiche des Kontaktbereichs bezogen auf die Betätigungsrichtung des jeweiligen Aktors gegeneinander versetzt sind. Dies könnte bspw. durch einen im Wesentlichen zylindrischen Aktor mit einer umlaufenden und außenseitig an der Stirnfläche vorgesehenen Fase erreicht werden. Eine besonders bevorzugte Form besteht in der Gestaltung mit einer konvex gewölbten Stirnfläche, wobei der Krümmungsradius hier in etwa dem des menschlichen Fingers ähneln sollte, also zwischen 5mm und 15mm im Mittel liegen sollte.

Alternativ oder zusätzlich ist die Gestaltung mit einem Kontaktbereich aus einem plastisch verformbaren Material möglich. So sind bspw. Gummikappen, insbesondere mit der genannten gewölbten Formgebung, gut geeignet, um die Betätigung und insbesondere die sich dabei am Aktor einstellende Kraftverteilung ähnlich der durch menschliche Finger verursachten nachzubilden.

Um die Bewegung des Tropfenspenders quer zur Richtung der Austragöffnung problemfrei zu ermöglichen, kann die Aufnahmeeinrichtung mit horizontal erstreckten Führungsschienen oder dergleichen ausgestaltet sein, in die Fortsätze des Spenders hineinragen.

Das bis hier beschriebene erfindungsgemäße Prüfgerät zeichnet sich somit durch eine Ausgestaltung aus, die besonders gut geeignet ist, einen Tropfenspender aufzunehmen und zu betätigen. Insbesondere zum Zwecke der Untersuchung des Austragsverhaltens von Tropfenspendern, die mit dem Prüfgerät untersucht werden, sind die folgenden Maßnahmen vorgesehen.

So wird es als vorteilhaft angesehen, wenn ein erfindungsgemäßes Prüfgerät Mittel aufweist, um nach einem Austragvorgang den sogenannten Resttropfen zu entfernen, der nach schwerkraftbedingter Abgabe eines Tropfens an der Tropfenbildungsfläche des Tropfenspenders verbleibt. Dieser Resttropfen, dessen volumetrische Voluminierung eines der Ziele von Entwicklern von Tropfenspendern ist, verbleibt bei den meisten Tropfenspendern nach dem Austragvorgang an der Außenseite des Spenders, da er zur Vermeidung von Kontamination nicht zurück in den Spender gesogen werden darf. Damit dieser bei einem Austragsvorgang verbliebene Resttropfen eine Folgemessung nicht beeinflusst und auch um hierdurch mittelbar das Volumen des Resttropfens zu ermitteln, verfügt ein erfindungsgemäßes Prüfgerät vorzugsweise über Mittel zur Entfernung dieses Resttropfens.

Dabei werden zwei Gestaltungen als besonders vorteilhaft angesehen. So ist es möglich, dass das Prüfgerät einen in eine Abnahmeposition unterhalb des Spenders bewegbaren Abnehmer zur Aufnahme des Resttropfens aufweist. Alternativ dazu ist es möglich, die Aufnahmeeinrichtung derart bewegbar auszugestalten, dass der Spender bis in eine Abnahmeposition bewegbar ist, an der ein während eines Prüfvorgangs ortsfest zur Basis verbleibender Abnehmer vorgesehen ist. Eine weitere Variation sieht vor, dass das Prüfgerät eine Einrichtung zur Erzeugung eines Luftstroms aufweist, mittels derer ein an der Austragöffnung des Spenders verbliebener Resttropfen entfernt werden kann.

Bei der ersten Gestaltung ist somit vorgesehen, dass ein zur Basis relativbeweglicher, beispielsweise verschwenkbarer, Abnehmer vorgesehen ist, der nach einem Tropfenaustragsvorgang in den Bereich der Austragöffnung geführt wird, um dort den Resttropfen aufzunehmen. Die zweite Variante sieht vor, dass die Aufnahmeeinrichtung selbst beweglich, beispielsweise schwenkbar, ausgebildet ist, sodass sie den Tropfenspender bis in eine Position bewegen kann, an der ein während des Prüfvorgangs ortsfester Abnehmer angeordnet ist, der den Resttropfen vom Spender abnimmt.

In beiden Fällen ist es möglich, den Abnehmer als schlichte Kontaktfläche auszugestalten, auf die der Resttropfen aufgrund der Gravitation bei Annäherung des Abnehmers an die Tropfenbildungsfläche hinüberläuft. Alternativ kann der Abnehmer auch mit einem Schwamm oder Kissen versehen sein, was ein besonders vollständiges Abnehmen des Resttropfens ermöglichen.

Bei der dritten Variante wird der Resttropfen durch einen mittels eines Gebläses oder einer Saugeinrichtung erzeugten Luftstroms entfernt.

Die Betätigungskraft, die auf den Aktoren ausgeübt wird, wird durch eine Steuereinrichtung vorzugsweise erfasst. Diese Erfassung kann durch Auswerten der am hierfür zuständigen Elektromotor anliegenden Spannung und des diesbezüglichen Stroms erfolgen. Von Vorteil sind jedoch separate Kraftmesser, die unmittelbar die Kraftbeaufschlagung des Tropfenspenders durch die Aktoren erfassen. Diese Messeinrichtung zur Erfassung der Betätigungskraft ermöglicht neben dem reinen Erfassen dieser Größe auch Regelkreise, um die Betätigung in Abhängigkeit der anliegenden Kraft anzupassen.

Das erfindungsgemäße Prüfgerät verfügt darüber hinaus vorzugsweise über eine Messeinrichtung, die die Masse des Tropfenspenders erfasst. Eine solche Messeinrichtung in Art einer Waage dient nicht primär der einmaligen Erfassung der Masse des Tropfenspenders, da diese üblicherweise bekannt ist und auch jenseits des Prüfgeräts erfasst werden könnte. Die Messeineinrichtung gestattet es jedoch in vorteilhafter Weise, die Größe eines abgegebenen Tropfens anhand der Massendifferenz vor und nach dem Austrag zu ermitteln. Dabei kann durch dreimal i-ges Messen vor dem Austragvorgang, nach dem Austragvorgang und nach dem oben beschriebenen Abnehmen des Resttropfens auch sehr genau erfasst werden, wie groß der am Tropfenspender nach dem Austragvorgang verbliebene Resttropfen ist.

Ein erfindungsgemäßes Prüfgerät weist eine Messeinrichtung zur Erfassung der Tropfenbildung am Tropfenspender und/oder zum Erfassen des Fallverhaltens eines Tropfens und/oder zum Erfassen des Aufprallverhalten des Tropfens auf.

Hier sind verschiedene Varianten möglich. Die Tropfenbildung sowie das Ablöse- und/oder Fallverhalten kann bspw. mittels Lichtschranken, kapazitiver oder induktiver Sensoren erfasst werden, die entlang der Fallstrecke und insbesondere im Bereich der Tropfenbildungsfläche des Tropfensspenders angeordnet werden. Durch die Verwendung mehrerer solcher Sensoren kann auch die Fallgeschwindigkeit erfasst werden. Eine weitere Möglichkeit zur Erfassung der Tropfenbildung des Fallverhaltens und des Aufprallverhaltens kann durch das Vorsehen einer Kamera gegeben sein, die die Austragöffnung des Tropfenspenders und/oder die unter der Auftragsöffnung angeordnete Fallstrecke erfasst.

Aufgrund der weitgehenden Unveränderlichkeit des von der Kamera beobachteten Bereichs ist eine Mustererkennung, die beispielsweise den Ablösezeitpunkt des Tropfens oder dessen Fallgeschwindigkeit erfasst vergleichsweise einfach zu realisieren. Eine solche Mustererkennung könnte durch einen zur Steuereinrichtung zugehörigen Mikroprozessor durchgeführt werden.

Die genannten Messeinrichtungen zur Erfassung der Tropfenbildung auf kapazitiver, induktiver oder optischer Basis können durch die Messeinrichtung zur Erfassung der Masse des Tropfenspenders ergänzt oder ersetzt werden. Auch diese Messeinrichtung gestattet ist, den Ablösezeitpunkt aufgrund der sich einstellenden Massenverringerung zu erfassen.

Vorteilhaft ist weiterhin eine Aufprallfläche unterhalb der Austragöffnung. Diese ist vorzugsweise mindestens um 30 mm, insbesondere vorzugsweise mindestens um 60 mm, unterhalb der Aufnahmeeinrichtung und/oder der Austragöffnung des Tropfenspenders vorgesehen. Der Aufprallfläche ist eine Messeinrichtung zugeordnet, mittels derer Eigenschaften des auf der Aufprallfläche aufkommenden Tropfens erfasst werden können, insbesondere die Aufprallkraft des Tropfens und dessen Masse. Auch bei den diesbezüglichen Messeinrichtungen kann es sich um vergleichsweise einfache Kraftsensoren handeln.

Ein erfindungsgemäßes Prüfgerät weist vorzugsweise eine elektronische Steuereineinrichtung zur Steuerung der Betätigungsvorrichtung und/oder zur Steuerung der Aufnahmeeinrichtung und/oder zur Steuerung des Abnehmers zur Abnahme des Resttropfens auf. Diese Steuereinrichtung ist vorzugsweise auch für die Auswertung der Signale der verschiedenen erwähnten Messeinrichtungen und Sensoren verantwortlich.

Wenngleich eine solche Steuereinrichtung auch durch einen üblichen PC gebildet sein könnte, der separat vom Prüfgerät vorgesehen ist und mit diesem beispielsweise über USB verbunden ist, wird es als bevorzugt angesehen, wenn eine unmittelbar in das Prüfgerät integrierte Steuereinrichtung Verwendung findet, die eine autonome Nutzung des Prüfgeräts gestattet.

Dennoch wird es als zweckmäßig angesehen, wenn das Prüfgerät mit einem PC oder einem Daten-Netzwerk verbunden werden kann, um es bündig in den Fertigungsablauf integrieren zu können. Dies gestattet es beispielsweise, Fertigungschargen in einer Datenbank entsprechend zu kennzeichnen, wenn ein zur Prüfung der Fertigungscharge entnommener Spender nicht innerhalb vorgegebener Toleranzen arbeitet. Die Datenübertragung zwischen dem Prüfgerät und einem zur Datenaufnahme vorgesehenen PC erfolgt vorzugsweise per XML.

Besonders bevorzugt ist eine Steuereinrichtung, die zum Abarbeiten von einem oder mehreren der nachfolgenden Programme ausgebildet ist:
So kann ein durch die Steuereinrichtung verarbeitetes Programm zum Betrieb der Steuereinrichtung derart ausgebildet sein, dass es die Betätigungseinrichtung mit einem vorgebbaren Kraftverlauf, einem vorgebbaren Geschwindigkeitsverlauf oder orientiert an anderen vorgebbaren Parameter ansteuert.

Das Programm zum Betrieb der Steuereinrichtung kann darüber hinaus vorzugsweise gestatten, dass die Steuerung der Betätigungseinrichtung in Abhängigkeit von Ausgabewerten der genannten Messeinrichtungen oder Sensoren erfolgt. So könnte auf ein Ansteigen der erforderlichen Betätigungskraft zur Bewegung der Aktoren mir einer vorgegebenen Geschwindigkeit durch die Steuereinrichtung mit einem Erhöhen der Betätigungskraft reagiert werden. Auch ein Absenken der Betätigungskraft bei ansteigender Gegenkraft ist möglich. So können verschiedene typische menschliche Betätigungsprofile mit verschiedenen Spendern überprüft werden.

Auch wäre die Ausgestaltung der Steuereinrichtung zur Einbeziehung von Ausgabewerten der Messeinrichtungen und Sensoren dafür geeignet, auf die Abgabe eines Tropfens auf verschiedene Art und Weise zu reagieren, beispielsweise durch sofortigen Wegfall der Betätigungskraft an den Aktoren.

Ein Programm der Steuereinrichtung könnte ebenfalls vorsehen, dass die Tropfenabgabe nacheinander in verschiedenen Ausrichtungen des Tropfenspenders erfolgt, welche durch eine motorisch antreibbare Aufnahmeeinrichtung automatisiert ansteuerbar sind. Hierdurch wäre es beispielsweise möglich, zu überprüfen, ob die Formgebung einer Tropfenbildungsfläche in Abhängigkeit des Winkels des Tropfenspenders zu signifikant unterschiedlichen Tropfengrößen führt oder der am Tropfenspender verbleibende Resttropfen hiervon maßgeblich beeinflusst wird.

Von Vorteil ist es darüber hinaus, wenn die Steuereinrichtung Prüfreihen mit einer Mehrzahl von Durchgängen mit jeweils mindestens einer Tropfenabgabe durchführen kann, wobei das entsprechende Programm der Steuereinrichtung vorzugsweise auch dafür ausgebildet ist, Grenzbetätigungsgeschwindigkeiten zu erfassen, bei deren Überschreitung keine Ansammlung des Tropfens an einer Tropfenbildungsfläche des Tropfensspenders mehr erfolgt, sondern die ausgegebene Flüssigkeit sich unmittelbar mit Durchqueren der Austragöffnung vom Spender löst.

Auch Prüfreihen, durch die für denselben Tropfenspender das Austragverhalten bei verschiedenen Winkeln zwischen einer Vertikalen und der Austragrichtung der Austragöffnung untersucht werden, sind zweckmäßigerweise durch die Steuereinrichtung automatisch durchführbar. So wäre beispielsweise denkbar, dass mehrere Austragvorgänge mit jeweils um 5° variierter Ausrichtung der Austragöffnung durchgeführt werden, bei denen Werte zur Tropfenbildung selbst und zum entstehenden Tropfen erfasst werden. Ein beispielhaft zu nennender Wert ist die erforderliche Betätigungskraft zum Ablösen eines Tropfens in Abhängigkeit der Schwenkstellung des Tropfenspenders und seiner Austragöffnung.

Eine besondere Form eines erfindungsgemäßen Prüfgeräts sieht vor, dass die Aufnahmeeinrichtung und damit auch der in ihr aufgenommene Tropfenspender gegenüber einer äußeren Umgebung gekapselt ist, sodass in dem dadurch entstehenden Innenraum variable Temperatur und Luftfeuchtigkeitsbedingungen geschaffen werden können. Hierdurch kann bei ausreichend genauer Messeinrichtung zur Erfassung der Masse des Tropfenspenders auch der Zeitraum erfasst werden, den es braucht, bis ein Resttropfen an der Tropfenbildungsfläche durch Trocknung entfernt ist.

Die Erfindung betrifft darüber hinaus ein Prüfgerät der beschriebenen Art mit einem in ihr aufgenommenen Tropfenspender, insbesondere ein Tropfenspender, dessen Betätigungsrichtung orthogonal zur Richtung der Austragöffnung verläuft, oder einem Tropfenspender, der mit einer Quetschflasche ausgebildet ist. In der bereits eingangs erläuterten Weise ist dieser Tropfenspender in der Aufnahmeeinrichtung derart angeordnet, dass seine Auftragsöffnung nach unten (+/- 30°) weist.

Ein erfindungsgemäßes Prüfgerät findet insbesondere Anwendung zur Überprüfung des Austragsverhaltens eines pharmazeutisches oder medizinisches Tropfenspenders, insbesondere eines Augentropfen-Spenders, insbesondere eines Spenders zur Behandlung des erhöhten Augeninnendrucks, zur Behandlung des trockenen Auges oder von Behandlung von Allergien oder Entzündungen.

Insbesondere handelt es sich um einen Tropfenspender zu Abgabe von Arzneimitteln, die Formulierungen in flüssiger Darreichungsform von in der Augenheilkunde gängigen Molekülgruppen enthalten. Dabei handelt es sich vor allem um die Molekülgruppen Alpha-2-Agonisten, (z. B. Brimonidin), Prostaglandinanaloga (z.B. Tafluprost, Latanoprost, Bimatoprost, Travoprost), Beta-Blocker (z. B. Timolol) und um Carboanhydrasehemmer (z. B. Dorzolamid), weiterhin um Hyaluronsäureverbindungen, Filmbildner allgemein (z. B. Methylcelluloseverbindungen) und um Cyclosporin sowie um Antihistaminika (z. B. Olopatadin und Levocabastin), Steroide (z. B. Loteprednol und Dexamethason) und um NSAID (z. B. Keterolac).

Um größere Zahlen von Tropfenspendern zu untersuchen, wird es als vorteilhaft angesehen, wenn dem Prüfgerät oder mehreren solcher Prüfgeräte ein Bestückungsroboter zugeordnet ist, der zu prüfende Tropfenspender einem Magazin entnimmt und dem Prüfgerät zuführt. Ein solches System bedarf einer Steuereinrichtung, die zeitlich abgestimmt zu den Prüfvorgängen weitere Tropfenspender mittels des Roboters zuführt. Die Steuerung des Roboters kann ebenfalls über die Steuereinrichtung des Prüfgeräts erfolgen.

### Kurzbeschreibung der Zeichnungen

Weiterer Aspekt und Vorteile der Erfindung ergeben sich außer aus den Ansprüchen aus der nachfolgenden Beschreibung eines bevorzugten Ausführungsbeispiels der Erfindung, welches anhand der Figuren erläutert wird. Dabei zeigen:
- Fig. 1 und 2: ein erfindungsgemäßes Prüfgerät in einer Gesamtdarstellung von vorne und von der Seite,
- Fig. 3 bis 6: einen mit dem Prüfgerät der Fig. 1 und 2 durchgeführten Prüfvorgang und
- Fig. 7: eine leicht modifizierte Variante des Prüfgerät der Figuren 1 bis 6.

### Detaillierte Beschreibung der Ausführungsbeispiele

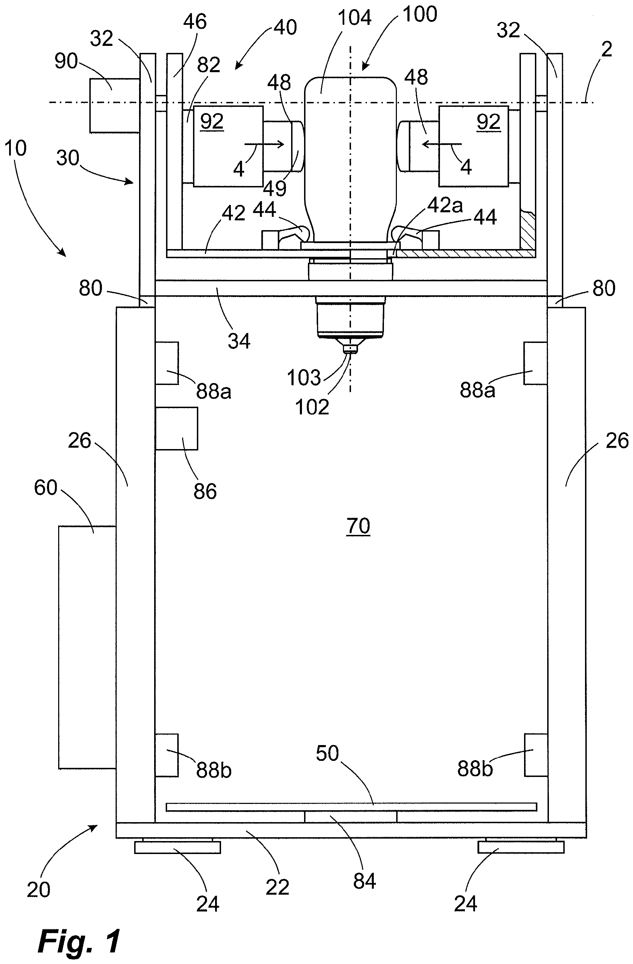

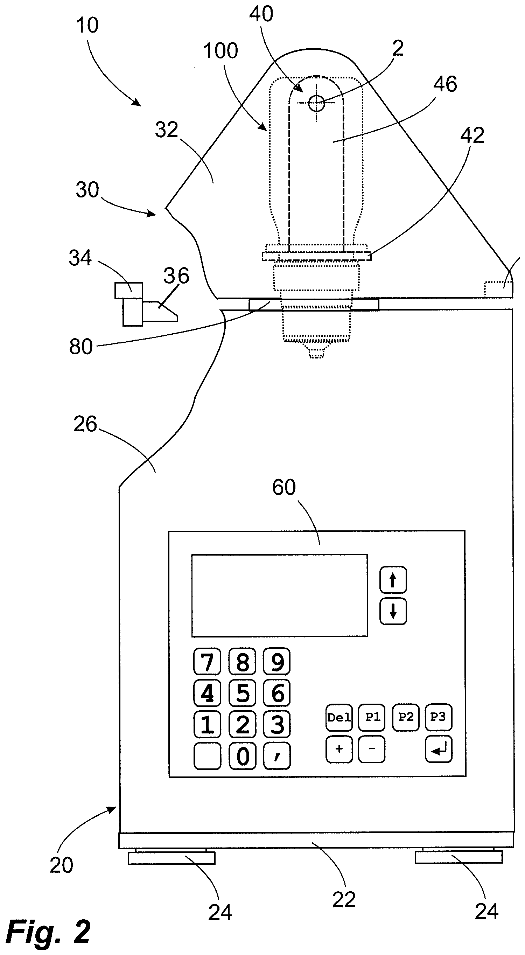

Die Fig. 1 und 2 zeigen ein erfindungsgemäßes Prüfgerät 10 in schematischer Darstellung und jeweils teilweise geschnitten.

Das Prüfgerät 10 verfügt über eine zum ortsfesten Aufstellen vorgesehener Basis 20. Diese Basis 20 ist zum ortsfesten Aufstellen, beispielsweise auf einer Tischoberfläche, vorgesehen und verfügt hierzu an einer Bodenplatte 22 über vier Stellfüße 24. Von der Basisplatte 20 erstrecken sich zwei Seitenwandungen 26 nach oben, die zwischen sich einen weiteren noch beschriebenen Fallstreckenbereich 70 einschließen.

Am oberen Ende schließt sich an die Seitenwandungen 26 ein Rahmen 30 an, der zwei mit den Seitenwandungen 26 fluchtende Giebelabschnitte 32 und zwei die Giebelabschnitte 32 verbindende Quertraversen 34 aufweist. Der Rahmen 30 liegt auf zwei Kraftsensoren 80 auf, die zwischen den Seitenwandungen 26 und dem Rahmen 30 angeordnet sind und die in nachfolgend noch beschriebener Weise dem Vermessen der Masse eines zu prüfenden Tropfenspenders dienen. Zwischen den Giebelabschnitten 32 des Rahmens 30 ist eine gondelartige Aufnahmeeinrichtung 40 vorgesehen, welche gegenüber dem Rahmen 30 um eine Schwenkachse 2 schwenkbeweglich ist. An einem der Giebelabschnitte 32 ist zum Verschwenken dieser Aufnahmeeinrichtung 40 ein Elektromotor 90 angebracht. Die gondelartige Aufnahmeeinrichtung 40 verfügt über eine Auflageplatte 42 mit einer Durchbrechung 42a sowie über Festlegemittel, die vorliegend über zwei Spanneinrichtungen 44 gebildet sind. Die Durchbrechung 42a und die Spanneinrichtungen 44 gestatten es, einen Tropfenspender 100 derartig an der gondelartigen Aufnahmeeinrichtung 40 zu befestigen, dass die Austragöffnung 102 dieses Tropfenspenders 100 vertikal nach unten weist. Der Tropfenspender 100 des Ausführungsbeispiels ist mit einer Quetschflasche 104 versehen, die sich von der Auflageplatte 42 nach oben erstreckt und die bestimmungsgemäß zum Zwecke des Tropfenaustrags zusammengedrückt wird.

Um eine derartige Betätigung automatisiert zu ermöglichen, sind an der Aufnahmeeinrichtung 40 Linearmotoren 92 vorgesehen, mittels derer die den Linearmotoren 92 jeweils zugeordneten Aktoren 48 in Richtung der Pfeile 4 verfahrbar sind. Die Aktoren selbst sind an ihrem zur Kraftbeaufschlagung der Quetschflasche 104 vorgesehenen Ende mit Kontaktabschnitten 49 versehen, die eine gewölbte Stirnfläche aus Gummi aufweisen, um hierdurch die Kraftbeaufschlagung der Quetschflasche 104 in ähnlicher Weise zu ermöglichen, wie dies auch durch Finger der menschlichen Hand erfolgt.

Die Linearmotoren 92 sind an Seitenwangen 46 der gondelartigen Aufnahmeeinrichtung 40 befestigt, wobei jeweils Kraftmesseinrichtungen 82 zwischen den genannten Seitenwangen 46 und den Linearmotoren vorgesehen sind, sodass die auf die Quetschflasche 104 aufgebrachte Kraft jederzeit erfasst werden kann.

Oberhalb der Basisplatte 22 der Basis 20 ist eine Aufprallplatte 50 vorgesehen. Zwischen dieser Aufprallplatte 50 und der Basisplatte 22 ist ebenfalls ein Kraftsensor 84 angeordnet, der durch das Auftreffen von Tropfen auf der Aufprallplatte 50 kraftbeaufschlagt wird.

Des Weiteren verfügt das dargestellte Prüfgerät 10 über eine Reihe weitere Sensoren bzw. Messeinrichtungen, die wie die bereits genannten Sensoren bzw. Messeinrichtungen mit einer nachfolgend noch beschriebenen Steuereinrichtung 60 verbunden sind. Zu diesen gehört eine Kamera 86, die derart angeordnet ist, dass sie eine Tropfenbildungsfläche 103 des Tropfenspenders 100 ebenso erfassen kann wie die Fallstrecke 70 oder den überwiegenden Teil der Fallstrecke 70. Weiterhin sind an den Seitenwandungen 26 Lichtschranken 88a, 88b vorgesehen, wobei jeweils eine Lichtschranke 88a im Bereich der Tropfenbildungsfläche 103 und eine Lichtschranke 88b unmittelbar oberhalb der Aufprallplatte 50 vorgesehen ist.

Die obere Lichtschranke 88a ist derart angeordnet, dass ihre Lichtstrecke während der Tropfenbildung unterbrochen wird und im Zuge des Ablösens eines Tropfens vom Tropfenspender 100 wieder freigegeben wird. Die untere Lichtschranke 88b ist so angeordnet, dass der Tropfen kurz vor seinem Aufprall auf der Aufprallfläche 50 durch diese erfasst werden kann.

Zur Auswertung der verschiedenen Sensoren 80, 82, 84, 86, 88a, 88b sowie zur Steuerung der Motoren 90, 92 ist die Steuereinrichtung 60 vorgesehen, welche in Fig. 2 detaillierter dargestellt ist. Diese Steuereinrichtung gestattet die Eingabe verschiedener Parameter, mittels derer ein Prüfvorgang beeinflusst werden kann. Hierbei können auch vorgegebene Programme der Steuereinrichtung ausgewählt werden, die beispielsweise geeignet sind, die Kraftbeaufschlagung des Tropfenspenders 100 einem vorgegebenen Weg-/Zeitverlauf folgend durchzuführen. Auch können hier Programme ausgewählt werden, die eine bestimmte Reaktion auf das Ablösen des Tropfens verursachen, wie beispielsweise einen sofortigen Wegfall der Betätigungskraft, sobald ein Tropfen abgegeben wurde.

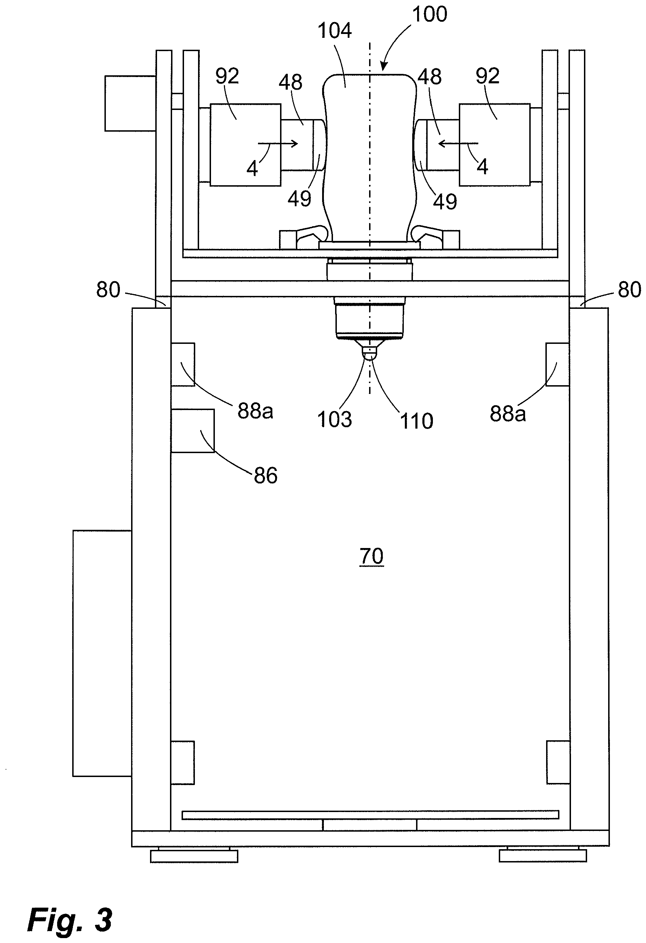

Die Fig. 3 bis 6 stellen einen einfachen Prüfvorgang dar. Ausgehend von dem Zustand der Fig. 1 und 2, in welchem der Tropfenspender 100 bereits in der Aufnahmeeinrichtung 40 eingespannt ist, jedoch noch nicht kraftbeaufschlagt ist, beginnt der Prüfvorgang damit, dass die Kraftsensoren 80 ausgewertet werden, um die Masse des Tropfenspenders 100 zu erfassen. Da die Masse der dem Prüfgerät 10 zugehörigen Teile, also des Rahmens 30 sowie der Aufnahmeeinrichtung 40 der Steuereinrichtung 60, bekannt sind, kann die an den Kraftsensoren 80 anliegende Kraft genutzt werden, um die Masse des Tropfenspenders 100 zu erfassen.

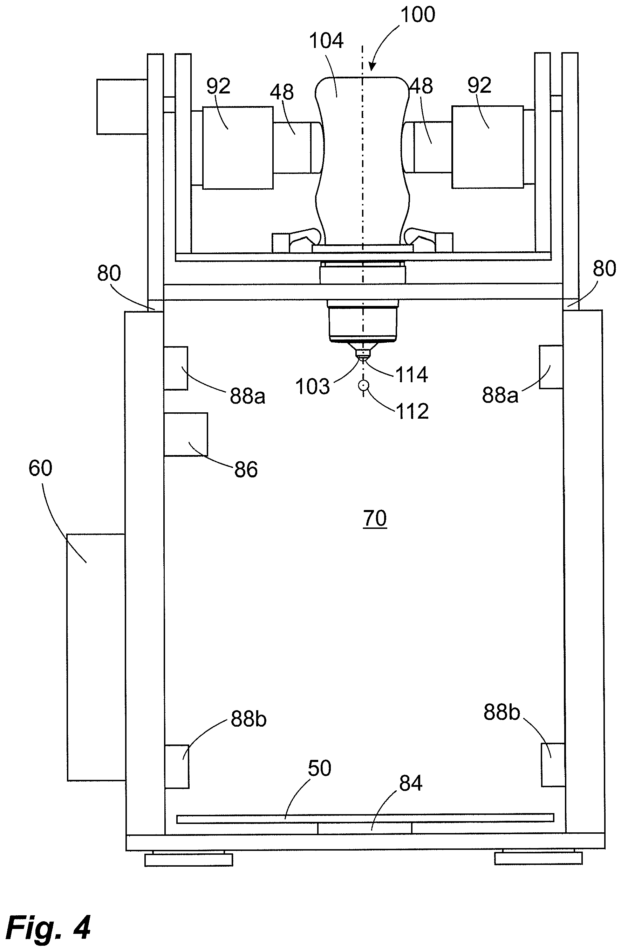

Nach Abschluss dieser Messung beginnt die Kraftbeaufschlagung des Tropfenspenders 100 durch gleichzeitige Verlagerung der Aktoren 48, wie es in Fig. 3 dargestellt ist. Aufgrund der Formgebung der Kontaktabschnitte 49 erfolgt die Kraftbeaufschlagung des Flüssigkeitsspeichers 104 des Tropfenspenders 100 in einer Weise, die der menschlichen Betätigung sehr vergleichbar ist. Mit zunehmender Kraftbeaufschlagung bildet sich an der die Austragöffnung 102 umgebenden Tropfenbildungsfläche 103 des Tropfenspender ein Tropfen 110, welcher zunächst an der Tropfenbildungsfläche 103 anhaftet. Dass die Tropfenbildung an der Tropfenbildungsfläche 103 begonnen hat, ist für die Steuereinrichtung 60 mittels der oberen Lichtschranke 88a nachvollziehbar. Mit Fortschreitender Bewegung der Aktoren 48 vergrößert sich das Volumen des Tropfens 110, bis sich in der Fig. 4 dargestellten Weise ein Teil dieses Tropfens 110 als Falltropfen 112 löst, während ein Flüssigkeitsrest als Resttropfen 114 an der Tropfenbildungsfläche 103 verbleibt. Das Ablösen des Falltropfens 112 wird durch die Lichtschranke 88 erfasst, kann jedoch auch stattdessen durch die Kraftsensoren 80 erfasst werden. Auch die Kamera 86 gestattet es zusammen mit einer Bilderkennung/Mustererkennung, das Ablösen des Tropfens zu erfassen.

Nach wenigen Augenblicken passiert der Falltropfen 112 die unteren Lichtschranken 88b, sodass es möglich ist, seine Geschwindigkeit zu ermitteln. Anschließend trifft der Falltropfen 112 auf der Aufprallplatte 50 auf, wobei der diesbezügliche Kraftstoß mittels des Kraftsensors 84 erfasst werden kann.

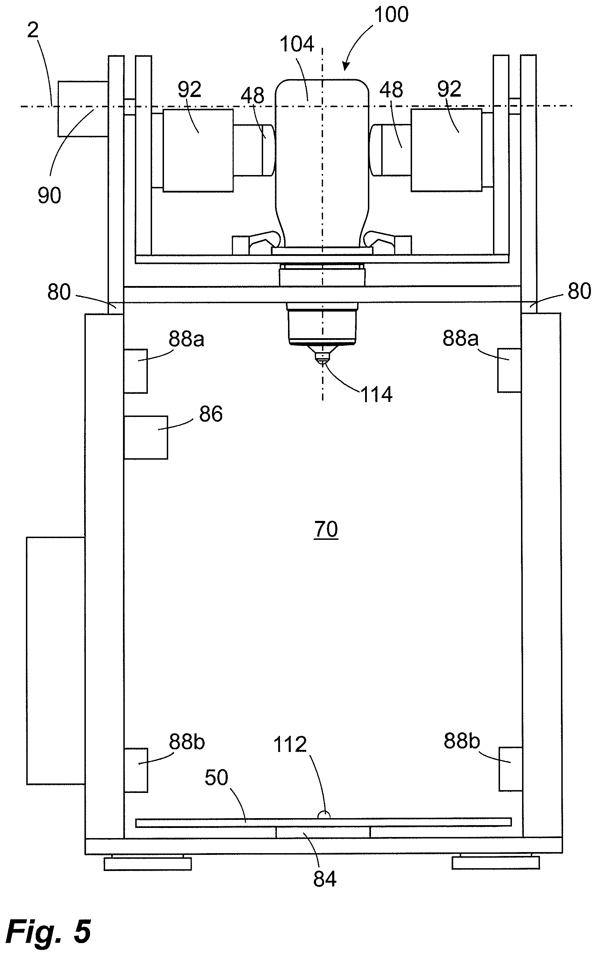

Sofort nach Erfassen des Ablösens des Falltropfens 112 mittels der oberen Lichtschranke 88 wird die Kraftbeaufschlagung des Flüssigkeitsspeichers 104 beendet. Die Aktoren 48 kehren in der in Fig. 5 verdeutlichten Weise in ihre Grundposition zurück.

Der Resttropfen 114 ist jedoch an der Tropfenbildungsfläche verblieben, da er aufgrund eines Rückschlagventils nicht zurück in die Flasche gesogen werden kann. Nach Erreichen des Zustandes der Fig. 5 wird mittels der Kraftsensoren 80 nochmals die Masse des Tropfenspenders gemessen. Diese ist um die Masse des Falltropfens 112 gegenüber der ersten Messung vermindert. Somit kann die Masse des abgegebenen Falltropfens 112 ermittelt werden.

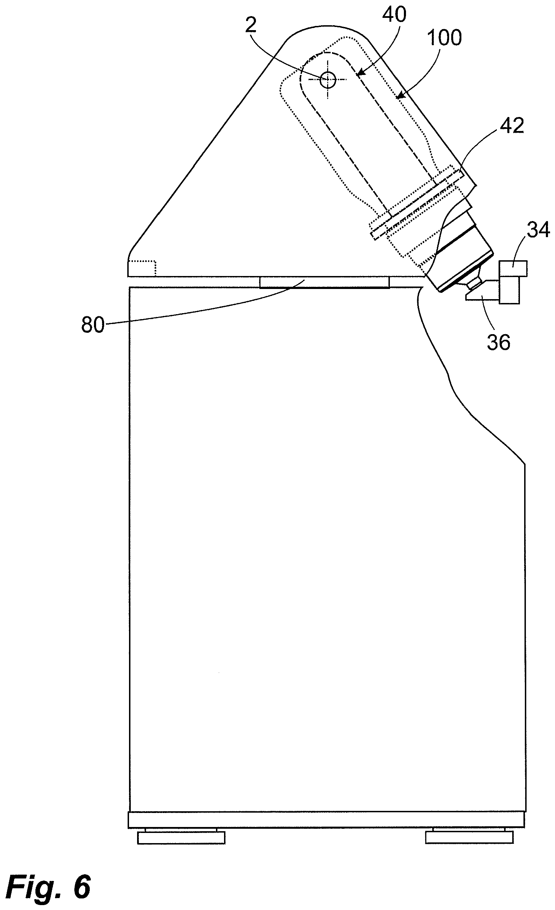

Um nun noch die Masse des Resttropfens 114 zu erfassen, wird in der in Fig. 6 dargestellten Weise die Aufnahmeeinrichtung 40 mittels des Motors 90 um die Schwenkachse 2 verschwenkt, sodass die Tropfenbildungsfläche 103 bis in den Bereich eines an einer der Quertraversen 34 angebrachten schwammartigen Abnehmers 36 gelangt. Nahezu die vollständigen Flüssigkeitsreste an der Tropfenbildungsfläche 103 werden hierdurch beseitigt. Bezogen auf Fig.1 zeigt Fig. 6 eine Perspektive von links, während Fig. 2 die Perspektive von rechts zeigt.

Durch eine dritte Messung mittels der Kraftsensoren 80 kann nun erfasst werden, welche Flüssigkeitsmenge als Resttropfen 114 an der Tropfenbildungsfläche 103 verblieben war.

Sobald der Spender in die Ausgangsposition der Fig. 1 und 2 zurückgeschwenkt wurde, kann ein weiterer Prüfvorgang beginnen, der möglicherweise mit einer anderen Betätigungskraft oder Geschwindigkeit erfolgt oder auch in einer anderen Schwenkstellung der Aufnahmeeinrichtung 40 um die Schwenkachse 2.

Bei einer nicht dargestellten Ausführungsform sind die dargestellten Komponenten des Prüfgeräts vollständig gegenüber einer Umgebung gekapselt, sodass ich spezifische Temperatur oder Luftfeuchtigkeitsbedingungen schaffen lassen, die bspw. die Zeit beeinflussen könnten, innerhalb derer der Resttropfen 114 ohne gezieltes Abnehmen trocknet. Weiterhin kann das Prüfgerät 10 in verschiedener Art und Weise an zu vermessende Typen von Tropfenspendern angepasst werden. So ist es beispielsweise möglich, die Aufnahmeeinrichtung 40 austauschbar zu gestalten, um Spender anderer Maße oder anderer Betätigungsart prüfen zu können. Auch können die verschiedenen Sensoren, insbesondere die Lichtschranken 88a, 88b sowie die Kamera 86, bei bevorzugten Ausgestaltungen in verschiedener Position an der Basis 20, insbesondere den Seitenwandungen 26, angebracht werden.

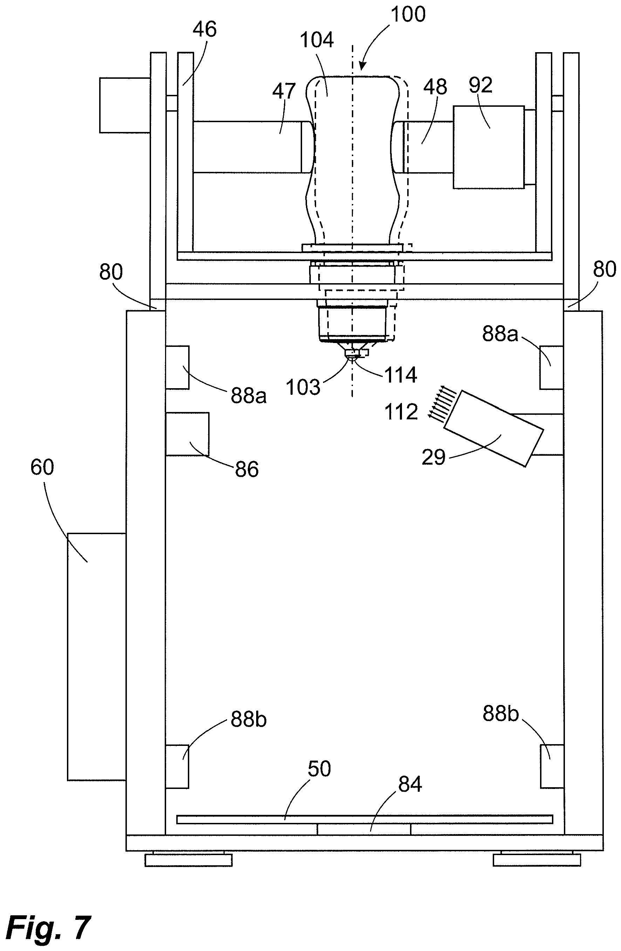

Fig. 7 zeigt eine leicht modifizierte Variante des Prüfgerät 10. Bei dieser sind insbesondere zwei Aspekte modifiziert.

Nach einer erfindungsgemäßen Modifizierung ist kein Abnehmer 36 vorgesehen. Stattdessen findet sich an einer der Seitenwandungen 26 ein Gebläse 29. Dieses ist in der Lage, nach Abgabe eines Tropfens den verbleibenden Resttropfen 114 mittels eines gegebenenfalls auch erwärmten Luftstroms zu beseitigen. Gleichermaßen könnte statt eines Gebläses auch eine Saugeinrichtung vorgesehen sein, welche mittels Unterdruck den Resttropfen ansaugt oder durch den am Resttropfen vorbeiströmenden Luftstrom beseitigt.

Nach einer nicht erfindungsgemäßen Modifizierung ist statt des beweglichen linken Aktors 48 ein fest mit der linken Seitenwange 46 verbundener feststehender Fortsatz 47 vorgesehen, der sich gegenüber der Seitenwange 46 nicht bewegt. Dieser Fortsatz ist hinsichtlich seiner Bauweise jedoch einem Aktor 48 vergleichbar gebaut und weist ebenfalls eine Gummikappe am Stirnende auf.

## Patentansprüche

1. Prüfgerät (10) für einen Flüssigkeitsspender (100) mit
- einer Basis (20) zum ortsfesten Aufstellen des Prüfgeräts (10),
- einer Aufnahmeeinrichtung (40) zur Aufnahme eines Flüssigkeitsspenders und
- einer Betätigungseinrichtung (92, 48), die zur mechanischen Betätigung des in der Aufnahmeeinrichtung (40) aufgenommenen Flüssigkeitsspenders (100) ausgebildet ist,
wobei
das Prüfgerät (10) als Prüfgerät (10) für einen Tropfenspender (100) ausgebildet ist, wobei
- die Aufnahmeeinrichtung (40) und die Betätigungsvorrichtung (92, 48) derart ausgebildet und angeordnet sind, dass der Tropfenspender (100) in einer Lage aufgenommen und betätigt werden kann, in der eine Austragöffnung (102) des Tropfenspenders (100) nach unten weist, und
- das Prüfgerät (10) unterhalb der Aufnahmeeinrichtung (40) mindestens eine Messeinrichtung (88a, 88b, 84, 86) zur Erfassung der Tropfenbildung am Tropfenspender (100) und/oder des Fallverhaltens und/oder Aufprallverhaltens des Tropfens (112) nach Ablösen vom Tropfenspender (100) aufweist,
**dadurch gekennzeichnet, dass**
die Betätigungseinrichtung (92, 48) mindestens zwei Aktoren (48) zur Kraftbeaufschlagung des Tropfenspenders (100) aufweist und dafür ausgebildet ist, den Tropfenspender (100) mittels der Aktoren (48) orthogonal zur Austragrichtung der Austragöffnung (102) kraftzubeaufschlagen, wobei die zwei Aktoren (48) dafür ausgebildet sind, den Tropfenspender (100) in zueinander entgegengesetzter Richtung kraftzubeaufschlagen.

2. Prüfgerät (10) nach Anspruch 1,
**dadurch gekennzeichnet, dass**
die Aufnahmeeinrichtung (40) schwenkbar ausgebildet ist, so dass die Ausrichtung des in der Aufnahmeeinrichtung (40) aufgenommenen Tropfenspenders (100) um mindestens 10° variiert werden kann, ohne ihn hierfür aus der Aufnahmeeinrichtung (40) zu entnehmen.

3. Prüfgerät (10) nach einem der vorstehenden Ansprüche,
**dadurch gekennzeichnet, dass**
der Aktor (48) einen Kontaktbereich (49) aufweist, der
- konvex geformt ist und/oder
- der aus einem plastisch verformbaren Material gebildet ist.

4. Prüfgerät (10) nach einem der vorstehenden Ansprüche,
**dadurch gekennzeichnet, dass**
- das Prüfgerät einen in eine Abnahmeposition unterhalb des Spenders bewegbaren Abnehmer für einen nach einem Austragvorgang an der Auslassöffnung verbleibenden Resttropfen aufweist oder
- die Aufnahmeeinrichtung (40) bewegbar ist, um den Spender in eine Abnahmeposition zu bewegen, in der ein an der Austragöffnung des Spenders verbliebener Resttropfen durch einen ortsfest zu Basis angeordneten Abnehmer (36) aufnehmbar ist oder
- das Prüfgerät eine Einrichtung zur Erzeugung eines Luftstroms aufweist, mittels derer ein an der Austragöffnung des Spenders verbliebener Resttropfen entfernt werden kann.

5. Prüfgerät (10) nach einem der vorstehenden Ansprüche,
**dadurch gekennzeichnet, dass**
das Prüfgerät (10) eine Messeinrichtung (82) aufweist, die die durch die Betätigungseinrichtung (92, 48) auf den Tropfenspender (100) ausgeübte Kraft erfasst.

6. Prüfgerät (10) nach einem der vorstehenden Ansprüche,
**dadurch gekennzeichnet, dass**
das Prüfgerät (10) eine Messeinrichtung (80) aufweist, die die Masse des Tropfenspenders (100) erfasst.

7. Prüfgerät (10) nach einem der vorstehenden Ansprüche,
**dadurch gekennzeichnet, dass**
das Prüfgerät (10) eine Kamera (86) zum Aufnehmen der Austragöffnung (102) des Tropfenspenders (100) und/oder einer unter der Austragöffnung vorgesehenen Fallstrecke (70) aufweist.

8. Prüfgerät (10) nach einem der vorstehenden Ansprüche,
**dadurch gekennzeichnet, dass**
das Prüfgerät (10) eine Sensorik (88a, 80) zur Erfassung des Ablösens eines Tropfens (112) vom Tropfenspender (100) aufweist.

9. Prüfgerät (10) nach einem der vorstehenden Ansprüche,
**dadurch gekennzeichnet, dass**
das Prüfgerät Messmittel (86, 88a, 88b) zur Erfassung der Geschwindigkeit eines Tropfens (112) nach dem Ablösen vom Tropfenspender (100) aufweist.

10. Prüfgerät (10) nach einem der vorstehenden Ansprüche,
**dadurch gekennzeichnet, dass**
das Prüfgerät (10) eine Aufprallfläche (50) unterhalb der Austragöffnung (102) aufweist, wobei dieser Aufprallfläche (50) eine Messeinrichtung (84) zugeordnet ist, mittels Eigenschaften eines auf der Aufprallfläche (50) aufkommenden Tropfens (112) erfasst werden können.

11. Prüfgerät (10) nach Anspruch 10,
**dadurch gekennzeichnet, dass**
die Messeinrichtung (84) derart ausgebildet ist, dass die Masse und/oder die Aufprallkraft des Tropfens (112) erfasst werden können.

12. Prüfgerät (10) nach einem dem vorstehenden Ansprüche,
**dadurch gekennzeichnet, dass**
das Prüfgerät (10) eine Steuereinrichtung (60) zur Steuerung der Betätigungsvorrichtung (92, 48) und/oder zu Steuerung des Abnehmers zur Aufnahme des Resttropfens und/oder zur Steuerung der Bewegung der Aufnahmeeinrichtung (40) aufweist.

13. Prüfgerät (10) nach Anspruch 12,
**dadurch gekennzeichnet, dass**
die Steuereinrichtung (60) dafür ausgebildet ist, nach einem oder mehreren der folgenden Programme zu arbeiten:
- Steuerung der Betätigungseinrichtung mit vorgebbarem Kraftverlauf, vorgebbarem Geschwindigkeitsverlauf und/oder vorgebbarem Betätigungsweg,
- Steuerung der Betätigungseinrichtung in Abhängigkeit von Ausgabewerten einer der genannten Messeinrichtungen, und/oder
- Durchführung einer Prüfreihe mit einer Mehrzahl von Durchgängen mit jeweils mindestens einer Tropfenabgabe, wobei die Betätigungseinrichtung mit variablen Betätigungsgeschwindigkeiten betätigt wird.

14. Prüfgerät (10) nach einem der vorstehenden Ansprüche,
**dadurch gekennzeichnet, dass**
in die Aufnahmeeinrichtung (40) ein Tropfenspender (100) aufgenommen ist, wobei der Tropfenspender (100) derart aufgenommen ist, dass eine Austragöffnung (102) des Tropfenspenders nach unten (+-30°) weist.

15. Verwendung eines Prüfgeräts nach einem der vorstehenden Ansprüche zur Überprüfung des Austragverhaltens eines pharmazeutischen oder medizinischen Spenders.

## Claims

1. Testing apparatus (10) for a liquid dispenser (100), having
- a base (20) for stationary positioning the testing apparatus (10),
- an accommodating device (40) for accommodating a liquid dispenser, and
- an actuating device (92, 48), which is designed for mechanical actuation of the liquid dispenser (100) accommodated in the accommodating device (40),
wherein
the testing apparatus (10) is designed in the form of a testing apparatus (10) for a drop dispenser (100), wherein
- the accommodating device (40) and the actuating device (92, 48) are designed, and arranged, such that the drop dispenser (100) can be accommodated, and actuated, in a position in which a discharging opening (102) of the drop dispenser (100) is oriented downwards, and
- the testing apparatus (10), beneath the accommodating device (40), has at least one measuring device (88a, 88b, 84, 86) for detecting the formation of drops on the drop dispenser (100) and/or the dropping behaviour and/or impact behaviour of the drop (112) following detachment from the drop dispenser (100),
**characterized in that**
the actuating device (92, 48) has at least two actuators (48) for subjecting the drop dispenser (100) to force, and it is designed so that the actuators (48) subject the drop dispenser (100) to force in a direction orthogonal to the discharging direction of the discharging opening (102), wherein the two actuators (48) are designed to subject the drop dispenser (100) to force in mutually opposite directions.

2. Testing apparatus (10) according to Claim 1,
**characterized in that**
the accommodating device (40) is of pivotable design, and therefore the orientation of the drop dispenser (100) accommodated in the accommodating device (40) can be varied by at least 10° without the dispenser being removed from the accommodating device (40) for this purpose.

3. Testing apparatus (10) according to either of the preceding claims,
**characterized in that**
the actuator (48) has a contact region (49), which
- is shaped convexly and/or
- is formed from a plastically deformable material.

4. Testing apparatus (10) according to one of the preceding claims,
**characterized in that**
- the testing apparatus has a removal means, which can be moved into a removal position beneath the dispenser and is intended for removing a residual drop which remains on the outlet opening following a discharging operation, or
- the accommodating device (40) can be moved in order for the dispenser to be moved into a removal position, in which a residual drop which remains on the discharging opening of the dispenser can be picked up by a removal means (36), which is arranged in a fixed state in relation to the base, or
- the testing apparatus has a device for generating an air stream, by means of which a residual drop which remains on the discharging opening of the dispenser can be removed.

5. Testing apparatus (10) according to one of the preceding claims,
**characterized in that**
the testing apparatus (10) has a measuring device (82) which detects the force to which the drop dispenser (100) is subjected by the actuating device (92, 48).

6. Testing apparatus (10) according to one of the preceding claims,
**characterized in that**
the testing apparatus (10) has a measuring device (80) which detects the mass of the drop dispenser (100) .

7. Testing apparatus (10) according to one of the preceding claims,
**characterized in that**
the testing apparatus (10) has a camera (86) for recording the discharging opening (102) of the drop dispenser (100) and/or a dropping route (70) provided beneath the discharging opening.

8. Testing apparatus (10) according to one of the preceding claims,
**characterized in that**
the testing apparatus (10) has a sensor system (88a, 80) for detecting the detachment of a drop (112) from the drop dispenser (100).

9. Testing apparatus (10) according to one of the preceding claims,
**characterized in that**
the testing apparatus has measuring means (86, 88a, 88b) for detecting the speed of a drop (112) following detachment from the drop dispenser (100).

10. Testing apparatus (10) according to one of the preceding claims,
**characterized in that**
the testing apparatus (10) has an impact surface (50) beneath the discharging opening (102), wherein said impact surface (50) is assigned a measuring device (84) by means of which it is possible to detect properties of a drop (112) which reaches the impact surface (50).

11. Testing apparatus (10) according to Claim 10,
**characterized in that**
the measuring device (84) is designed such that it is possible to detect the mass and/or the impact force of the drop (112).

12. Testing apparatus (10) according to one of the preceding claims,
**characterized in that**
the testing apparatus (10) has a control device (60) for controlling the actuating device (92, 48) and/or for controlling the removal means for picking up the residual drop and/or for controlling the movement of the accommodating device (40).

13. Testing apparatus (10) according to Claim 12,
**characterized in that**
the control device (60) is designed to operate in accordance with one or more of the following programs:
- controlling the actuating device with a predeterminable progression of force, a predeterminable progression of speed and/or a predeterminable actuating path,
- controlling the actuating device in dependence on output values from one of the aforementioned measuring devices, and/or
- carrying out a series of tests with a number of rounds each with at least one drop-dispensing operation, wherein the actuating device is actuated at variable actuating speeds.

14. Testing apparatus (10) according to one of the preceding claims,
**characterized in that**
a drop dispenser (100) is accommodated in the accommodating device (40), wherein the drop dispenser (100) is accommodated such that a discharging opening (102) of the drop dispenser is oriented downwards (+-30°).

15. Use of a testing apparatus according to one of the preceding claims for the purpose of checking the discharging behaviour of a pharmaceutical or medical dispenser.

## Revendications

1. Appareil de contrôle (10) pour un distributeur de liquide (100) comprenant
- une base (20) permettant la pose stationnaire de l'appareil de contrôle (10),
- un réceptacle (40) pour le logement d'un distributeur de liquide et
- un système de manoeuvre (92, 48), qui est conçu pour manoeuvrer mécaniquement le distributeur de liquide (100) logé dans le réceptacle (40),
l'appareil de contrôle (10) étant conçu sous la forme d'un appareil de contrôle (10) pour un compte-gouttes (100),
- le réceptacle (40) et le dispositif de manoeuvre (92, 48) étant conçus et placés de telle sorte que le compte-gouttes (100) puisse être logé et manoeuvré dans une position dans laquelle un orifice de sortie (102) du compte-gouttes (100) est dirigé vers le bas et
- l'appareil de contrôle (10) comportant en-dessous du réceptacle (40) au moins un système de mesure (88a, 88b, 84, 86) pour la détection de la formation de gouttes sur le compte-gouttes (100) et/ou du comportement de la chute et/ou du comportement de la collision de la goutte (112) après sa désolidarisation du compte-gouttes (100),
**caractérisé en ce que**
le système de manoeuvre (92, 48) comporte au moins deux actionneurs (48) destinés à soumettre le compte-gouttes (100) à une force et est conçu pour soumettre au moyen des actionneurs (48) le compte-gouttes (100) à une force de manière orthogonale à la direction de sortie de l'orifice de sortie (102), les deux actionneurs (48) étant conçus pour soumettre le compte-gouttes (100) à une force dans une direction mutuellement opposée.

2. Appareil de contrôle (10) selon la revendication 1,
**caractérisé en ce que**
le réceptacle (40) est conçu de manière pivotante, de sorte à pouvoir faire varier d'au moins 10° l'orientation du compte-gouttes (100) logé dans le réceptacle (40), sans le retirer du réceptacle (40) à cet effet.

3. Appareil de contrôle (10) selon l'une quelconque des revendications précédentes,
**caractérisé en ce que**
l'actionneur (48) comporte une zone de contact (49)
- qui est de forme convexe et/ou
- qui est conçue en une matière plastiquement déformable.

4. Appareil de contrôle (10) selon l'une quelconque des revendications précédentes,
**caractérisé en ce que**
- l'appareil de contrôle comporte un preneur mobile en-dessous du distributeur dans la position de prélèvement, pour une goutte résiduelle restant sur l'orifice de sortie après un processus de déversement ou
- le réceptacle (40) est mobile, pour déplacer le distributeur dans une position de prélèvement, dans laquelle une goutte résiduelle restant sur l'orifice de sortie du distributeur est susceptible d'être reçue par un preneur (36) placé de manière stationnaire par rapport à la base ou
- l'appareil de contrôle comporte un système destiné à générer un flux d'air, au moyen duquel une goutte résiduelle restant sur l'orifice de sortie du distributeur peut être retirée.

5. Appareil de contrôle (10) selon l'une quelconque des revendications précédentes,
**caractérisé en ce que**
l'appareil de contrôle (10) comporte un système de mesure (82), qui détecte la force exercée sur le compte-gouttes (100) par le système de manoeuvre (92, 48)

6. Appareil de contrôle (10) selon l'une quelconque des revendications précédentes,
**caractérisé en ce que**
l'appareil de contrôle (10) comporte un système de mesure (80) qui détecte la masse du compte-gouttes (100) .

7. Appareil de contrôle (10) selon l'une quelconque des revendications précédentes,
**caractérisé en ce que**
l'appareil de contrôle (10) comporte une caméra (86) destinée à enregistrer l'orifice de sortie (102) du compte-gouttes (100) et/ou un trajet de chute (70) prévu sous l'orifice de sortie.

8. Appareil de contrôle (10) selon l'une quelconque des revendications précédentes,
**caractérisé en ce que**
l'appareil de contrôle (10) comporte un système de capteurs (88a, 80) pour la détection de la désolidarisation d'une goutte (112) du compte-gouttes (100).

9. Appareil de contrôle (10) selon l'une quelconque des revendications précédentes,
**caractérisé en ce que**
l'appareil de contrôle comporte des moyens de mesure (86, 88a, 88b) pour la détection de la vitesse d'une goutte (112), après sa désolidarisation du compte-gouttes (100).

10. Appareil de contrôle (10) selon l'une quelconque des revendications précédentes,
**caractérisé en ce que**
l'appareil de contrôle (10) comporte une surface d'impact (50) en-dessous de l'orifice de sortie (102), à ladite surface d'impact (50) étant associé un système de mesure (84) au moyen duquel des propriétés d'une goutte (112) arrivant sur la surface d'impact (50) peuvent être détectées.

11. Appareil de contrôle (10) selon la revendication 10,
**caractérisé en ce que**
le système de mesure (84) est conçu de telle sorte que la masse et/ou la force d'impact de la goutte (112) puissent être détectées.

12. Appareil de contrôle (10) selon l'une quelconque des revendications précédentes,
**caractérisé en ce que**
l'appareil de contrôle (10) comporte un système de commande (60), destiné à commander le dispositif de manoeuvre (92, 48) et/ou destiné à commander le preneur pour la réception de la goutte résiduelle et/ou destiné à commander le déplacement du réceptacle (40).

13. Appareil de contrôle (10) selon la revendication 12,
**caractérisé en ce que**
le système de commande (60) est conçu pour fonctionner selon l'un ou plusieurs des programmes suivants :
- la commande du système de manoeuvre avec une courbe de force prédéfinissable, une courbe de vitesse prédéfinissable et/ou une course de manoeuvre prédéfinissable,
- la commande du système de manoeuvre en fonction de valeurs délivrées d'un des systèmes de mesure cités et/ou
- la réalisation d'une série de contrôles avec une pluralité de passages, avec chaque fois au moins une distribution de goutte, le système de manoeuvre étant manoeuvré à des vitesses de manoeuvre variables.

14. Appareil de contrôle (10) selon l'une quelconque des revendications précédentes,
**caractérisé en ce que**
dans le réceptacle (40) est logé un compte-gouttes (100), le compte-gouttes (100) étant logé de telle sorte qu'un orifice de sortie (102) du compte-gouttes soit dirigé vers les bas (+-30°).

15. Utilisation d'un appareil de contrôle selon l'une quelconque des revendications précédentes pour contrôler le comportement de distribution d'un distributeur pharmaceutique ou médical.
